# EUROPÄISCHE PATENTANMELDUNG

(11) **EP 2 846 110 A1**
(43) Veröffentlichungstag der Anmeldung: **11.03.2015**
(21) Anmeldenummer: 14179839.7
(22) Anmeldetag: 05.08.2014
(51) Int. Cl.: F24J 2/52, F24J 2/46

(54) **Befestigungssystem für Solarelemente und Kupplungselement für ein derartiges Befestigungssystem**

(30) Priorität: 09.09.2013 DE 102013217964
(71) Anmelder: ROBERT BOSCH GMBH, 70442 Stuttgart (DE)
(72) Erfinder: Loehmann, Juergen, 73249 Wernau (DE)

(57) **Zusammenfassung**

Die Erfindung betrifft ein Befestigungssystem für Solarelemente (2, 3, 4), insbesondere Solarmodule oder Solarkollektoren, mit mindestens einer Schiene (5, 6), mindestens einem Kupplungselement (7, 8, 9, 10, 24, 25) und insbesondere mindestens einem Anschlussstecker (42). Das Kupplungselement (7, 8, 9, 10, 24, 25) ist in der Schiene (5, 6) festlegbar geführt und weist mindestens eine Aufnahme (20, 21, 22, 23, 26, 27) auf, in die der Anschlussstecker (42) mit einem ersten Ende (44) formschlüssig aufnehmbar ist.

Die Montage der Solarelemente soll vereinfacht werden.

Dafür weist das Kupplungselement (7, 8, 9, 10, 24, 25) einen in die Aufnahme (20, 21, 22, 23, 26, 27) mündenden fluidleitenden oder elektrisch leitenden Kanal (31, 31') und der Anschlussstecker (42) eine fluidleitende oder elektrisch leitende Verbindung auf, die bei in die Aufnahme (20, 21, 22, 23, 26, 27) eingeführtem Anschlussstecker (42) mit dem Kanal (31, 31') in fluidleitender oder elektrisch leitender Verbindung steht. Der in die Aufnahme (20, 21, 22, 23, 26, 27) des Kupplungselements (7, 8, 9, 10, 24, 25) aufgenommene Anschlussstecker (42) bildet dann eine mechanische Befestigung und eine hydraulische oder elektrische Verbindung zwischen einem mit dem Anschlussstecker (42) verbundenen Solarelement (2, 3, 4) und dem Kupplungselement (7, 8, 9, 10, 24, 25).

## Beschreibung

Die Erfindung betrifft ein Befestigungssystem für Solarelemente nach dem Oberbegriff des Patentanspruchs 1 und ein Kupplungselement gemäß dem Oberbegriff des Anspruchs 14.

Der Begriff Solarelemente soll dabei sowohl Solarmodule bzw. photovoltaische Zellen umfassen, die Sonnenlicht in elektrische Energie umwandeln, als auch Solarkollektoren, mit deren Hilfe Sonnenlicht in thermische Energie umgewandelt wird.

Zur Befestigung der Solarelemente ist es bekannt, Schienen zu verwenden, die beispielsweise als Unterkonstruktion auf einem Dach oder einer Fassade eines Gehäuses angebracht werden. In den Schienen sind dann Kupplungselemente geführt, an denen die Solarelemente befestigt werden können. Dafür sind die Solarelemente in der Regel mit Anschlusssteckern versehen, die mit den Kupplungselementen verrasten können und so eine mechanisch stabile Verbindung herstellen.

Üblicherweise verlaufen dabei zwei Schienen parallel zueinander, wobei den in der Regel rechteckigen Solarelementen dann vier Kupplungselemente zugeordnet werden. Damit wird eine sichere Befestigung erreicht, die die auftretenden Kräfte, beispielsweise Winddruck, aufnehmen kann.

Bei Solarmodulen ist dann zusätzlich eine elektrische Verbindung zwischen benachbarten Solarmodulen erforderlich. Solarkollektoren benötigen demgegenüber eine hydraulische Verbindung. Insbesondere bei kleineren Anlagen ist es dabei üblich, mehrere Solarelemente in Reihe zu schalten. Die entsprechenden Verbindungen, als die fluidleitende bzw. hydraulische Verbindung im Falle von Solarkollektoren oder die elektrisch leitende Verbindung im Falle von Solarmodulen wird dabei durch zusätzliche Elemente wie Verbindungskabel oder Rohrleitungen hergestellt. Die Montage der Solarelemente mit der Befestigung auf den Schienen und der zusätzlichen elektrischen beziehungsweise fluidleitenden Verbindung der Solarelemente untereinander ist dabei relativ aufwendig.

Es ist daher eine Aufgabe der Erfindung, ein Befestigungssystem für Solarelemente bereitzustellen, das einen geringen Montageaufwand benötigt. Dabei sollen möglichst wenige Elemente zum Einsatz kommen und insbesondere die Anzahl der erforderlichen Kupplungselemente verringert werden. Darüber hinaus soll eine zuverlässige Befestigung der Solarelemente erfolgen und das Befestigungssystem möglichst kostengünstig sein.

Erfindungsgemäß wird diese Aufgabe durch ein Befestigungssystem mit den Merkmalen des Anspruchs 1 sowie durch ein Kupplungselement mit den Merkmalen des Anspruchs 14 gelöst. Vorteilhafte Ausgestaltungen finden sich in den Unteransprüchen.

Bei einem Befestigungssystem für Solarelemente, wie Solarmodule oder Solarkollektoren, mit mindestens einer Schiene, mindestens einem Kupplungselement und mindestens einem Anschlussstecker, wobei das Kupplungselement in der Schiene festlegbar geführt ist und mindestens eine Aufnahme aufweist, in die der Anschlussstecker mit einem ersten Ende formschlüssig aufnehmbar ist, ist erfindungsgemäß vorgesehen, dass das Kupplungselement einen in die Aufnahme mündenden fluidleitenden oder elektrisch leitenden Kanal und der Anschlussstecker eine fluidleitende oder elektrisch leitende Verbindung aufweist, die bei in die Aufnahme eingeführten Anschlussstecker mit dem Kanal in fluidleitender oder elektrisch leitender Verbindung steht, wobei der in die Aufnahme des Kupplungselements aufgenommene Anschlussstecker eine mechanische Befestigung und eine hydraulische oder elektrische Verbindung zwischen einem mit dem Anschlussstecker verbundenen Solarelement und dem Kopplungselement bildet.

Erfindungsgemäß ist also vorgesehen, mit einem einzigen Element, dem Kupplungselement, sowohl eine mechanische Befestigung des Solarelements zu erreichen, als auch gleichzeitig eine hydraulische oder elektrische Kopplung herzustellen. Im Falle einer Ausgestaltung der Solarelemente als Solarkollektoren wird dabei eine fluidleitende Verbindung bereitgestellt, ohne dass eine nachträgliche Verrohrung erfolgen muss. Bei der Ausgestaltung der Solarelemente als Solarmodule erfolgt gleichzeitig mit der mechanischen Befestigung eine elektrische Kontaktierung, also die Herstellung einer elektrisch leitenden Verbindung. Je nachdem, ob das Befestigungssystem für Solarmodule oder für Solarkollektoren eingesetzt werden soll, werden dann Kupplungselemente und Anschlussstecker mit einem fluidleitenden Kanal beziehungsweise einer fluidleitenden Verbindung ausgewählt oder eben mit einem elektrisch leitenden Kanal bzw. einer elektrisch leitenden Verbindung. Das Verbindungsprinzip bleibt aber das Gleiche, wobei über das Kupplungselement und dem Anschlussstecker nicht nur die mechanische Verbindung hergestellt wird, sondern im gleichen Arbeitsschritt auch die erforderliche funktionale, also hydraulische oder elektrische Kopplung benachbarter Solarelemente. Diese können dabei seriell oder parallel verschaltet werden.

Der Anschlussstecker kann Teil des Solarelements sein, so dass das Solarelement direkt ohne zusätzliche Elemente mit dem Kupplungselement verbunden werden kann. Zusätzlich zur formschlüssigen Verbindung kann dabei eine Verbindung mittels schrauben, löten, schweißen, kleben oder ähnliches erfolgen.

Der Anschlussstecker kann aber auch als eigenständiges Element ausgebildet sein. Dann kann er beispielsweise mittels schrauben, löten, schweißen, kleben, stecken oder ähnliches mit dem Solarelement und dem Kupplungselement verbunden werden.

Bei einer Ausbildung des Anschlussteckers als eigenständiges Element ist es vorteilhaft, dass der Anschlussstecker an einem dem ersten Ende abgewandten zweite Ende eine Anschlussgeometrie zum Festlegen an einem Solarelement aufweist. Die fluidleitende oder elektrisch leitende Verbindung ist dann zwischen erstem und zweitem Ende ausgebildet.

Vorzugsweise ist der Anschlussstecker innerhalb der Aufnahme verrastbar, wobei insbesondere ein Rastelement mit dem Anschlussstecker und dem Kupplungselement zusammenwirkt. Eine Rastverbindung lässt sich relativ einfach herstellen und ermöglicht beispielsweise ein werkzeugloses Einsetzen des Anschlusssteckers in die Aufnahme des Kupplungselements mit automatischer Verrastung, sodass ein ungewolltes Lösen nicht ohne weiteres möglich ist. Auch durch vom Kupplungselement weggerichtete Kräfte, beispielsweise durch Windsog oder aufgrund des Drucks in der fluidleitenden Verbindung, können damit sicher aufgenommen werden, ohne dass ein Lösen der Solarelemente zu befürchten ist. Durch das zusätzliche Vorsehen eines Rastelements, wie beispielsweise einer Sicherungsklammer, kann dann eine noch höhere Sicherheit erreicht werden und gegebenenfalls auch ein Diebstahlschutz realisiert werden.

Vorzugsweise sind mindestens zwei Schienen parallel zueinander angeordnet. Dadurch ist es möglich, jeder Ecke eines rechteckigen Solarelements ein Kupplungselement zuzuordnen, wobei jeweils zwei einem Solarelement zugeordnete Kupplungselemente in einer Schiene geführt sind.

In einer bevorzugten Ausgestaltung weist die Schiene einen C-förmigen Querschnitt mit einem Boden, zwei Seitenwänden und zwei aufeinander zu gewandten Schenkeln auf. Die Kupplungselemente können so in Längsrichtung der Schiene geführt sein, in allen anderen Richtungen aber formschlüssig geführt werden. Damit ist eine sichere Verbindung, über die auch größere Kräfte übertragbar ist, zwischen den Kupplungselementen und den Schienen gewährleistet.

Dabei ist besonders bevorzugt, dass ein insbesondere im montierten Zustand unterer Schenkel der Schiene durch eine Vielzahl in Längsrichtung der Schienen nebeneinander angeordnete Laschen gebildet ist, die einzeln in Richtung Boden plastisch verformbar sind, wobei das Kupplungselement zwischen zwei plastisch verformten Laschen in Längsrichtung fixierbar ist. Mithilfe der Laschen lassen sich die Kupplungselemente also an nahezu beliebiger Position in der Schiene durch einfaches Umbiegen der Laschen fixieren. Damit wird eine vollständige formschlüssige Befestigung der Kupplungselemente erreicht, ohne dass zusätzliche Elemente erforderlich sind.

Eine hohe mechanische Stabilität der Schiene wird dadurch erreicht, dass einer der Schenkel flächig ausgebildet ist. Dies ist insbesondere der im montierten Zustand obere Schenkel der Schiene.

In einer bevorzugten Weiterbildung sind in einer der Seitenwände der Schiene Öffnungen zum Durchführen von mit dem Kupplungselement zusammenwirkenden Justageelementen ausgebildet. Justageelemente sind dabei insbesondere als Schrauben ausgebildet. Mithilfe der Justageelemente ist eine XY-Justage der montierten Solarelemente möglich, um ein konstantes Fugenbild benachbarter Solarelemente einstellen zu können. Die gegenseitige Ausrichtung benachbarter Solarelemente ist dabei insbesondere bei der Verwendung von Schrauben als Justageelemente sehr einfach möglich.

Ein einfaches Verbinden der Schienen in Längsrichtung miteinander zur Realisierung auch größerer Solaranlagen ergibt sich dadurch, dass die Schienen an ihren Enden zueinander komplementäre Verbindungsgeometrien zum formschlüssigen Verbinden benachbarter Schienen aufweisen können. Damit entstehen auch an der Verbindungsstelle benachbarter Schienen keine Stufen oder störenden Kanten, die bei der Längsverschiebung der Kupplungselemente bei der Erstmontage hinderlich sein könnten.

In einer bevorzugten Ausgestaltung ist eine Länge der Schiene durch einfaches Ablängen anpassbar. Die Schienen, die beispielsweise als Metallprofil hergestellt werden, können dann Vorort an einer Baustelle einfach an die gewünschte Länge angepasst werden. Anstelle zueinander komplementärer Verbindungsgeometrien an den Enden der Schienen können dann, um das Ablängen zu vereinfachen, gegebenenfalls zusätzliche Verbinder vorgesehen werden. Es ist auch denkbar, die Schienen einfach stumpf aneinander anstoßend zu verlegen.

Bevorzugterweise weist das Kupplungselement eine insbesondere quaderförmige Basis auf, die zwei zueinander parallele Führungsseiten aufweist, die durch zwei Stirnseiten miteinander verbunden sind, wobei die Basis innerhalb der Schiene aufnehmbar ist und wobei sich die Aufnahme durch einen Freiraum zwischen den Schenkeln der Schiene hindurch erstreckt. Das Kupplungselement wird dann mit seinen Führungsseiten an den Seitenwänden der Schiene geführt. Die Aufnahme für den Anschlussstecker bleibt aber dennoch gut erreichbar, indem sich dieser zwischen den Schenkeln der Schiene hindurch von der Schiene weg erstreckt. Insbesondere verläuft dabei die Aufnahme senkrecht zur Basis des Kupplungselements. Das Kupplungselement kann so sehr stabil gefertigt werden und auch größere mechanische Kräfte aufnehmen.

In einer bevorzugten Weiterbildung steht der Kanal zumindest teilweise von der Basis vor und verläuft insbesondere parallel zu den Führungsseiten, wobei er gegebenenfalls im Freiraum zwischen den Schenkeln der Schiene aufnehmbar ist. Eine Dicke der quaderförmigen Basis des Kupplungselements kann dann relativ gering gehalten werden, wobei für den Kanal eine entsprechende Erhebung beziehungsweise Materialverdickung vorgesehen ist. indem diese in den Freiraum zwischen den Schenkeln der Schiene aufgenommen werden kann, kann das Profil der Schiene relativ flach bleiben, also nur wenig auf eine Unterkonstruktion auftragen.

In einer bevorzugten Ausgestaltung weist das Kupplungselement zwei Aufnahmen auf, die über den Kanal fluidleitend oder elektrisch leitend miteinander verbunden sind, wobei sich die Aufnahme insbesondere parallel zueinander auf der gleichen Seite der Basis und gegebenenfalls senkrecht zum Kanal erstreckt. Bei einer derartigen Ausgestaltung des Kupplungselements können mit einem Kupplungselement zwei benachbarte Solarelemente miteinander mechanisch und hydraulisch oder elektrisch verbunden werden. Dabei erfolgt insbesondere eine serielle Verschaltung benachbarter Solarelemente. Da benachbarte Solarelemente mit gemeinsamen Kupplungselementen befestigt und miteinander verschaltet werden, ist eine relativ geringe Anzahl an Kupplungselementen ausreichend. Die Anzahl der für die Montage der Solarelemente erforderlichen Bauteile wird so gering gehalten.

In einer alternativen Ausgestaltung mündet der Kanal in einer Verbindungsgeometrie, die insbesondere in einer der Stirnseiten des Kupplungselements ausgebildet ist. Das Kupplungselement dient dann zur Verbindung der Solarelemente beispielsweise mit einer Gebäudehydraulik oder Gebäudeelektronik oder kann dazu verwendet werden, einzelne Reihen von Solarelementen parallel miteinander zu verbinden.

Vorzugsweise ist der Anschlussstecker mit dem Solarelement kraftschlüssig, formschlüssig und/oder stoffschlüssig verbindbar. Insbesondere ist die Anschlussgeometrie des Anschlusssteckers dafür als Innengewinde ausgebildet. Damit ist eine mechanisch stabile und gegebenenfalls fluiddichte Verbindung zwischen dem Anschlussstecker und dem Solarelement herstellbar. Der Anschlussstecker muss dabei in der Lage sein, das Eigengewicht des Solarelements zu tragen und gegebenenfalls die elektrische Kontaktierung sicherzustellen oder, im Falle der Ausgestaltung des Solarelements als Solarkollektor, die hydraulische Verbindung bereitzustellen.

Am ersten Ende des Anschlusssteckers kann eine Rast- und Dichtgeometrie ausgebildet sein, die insbesondere durch mindestens einen radial vorstehenden, umlaufenden Kragen gebildet ist. Eine so gebildete Nut kann beispielsweise einen gummielastischen Dichtring (O-Ring) aufnehmen, der der Abdichtung zwischen Anschlussstecker und Kupplungselement dient. Der Anschlussstecker kann so relativ einfach mit dem Kupplungselement verrastet werden.

Eine hohe mechanische Stabilität wird beispielsweise dadurch erreicht, dass der Anschlussstecker mindestens zwei radial vorstehende, umlaufende Flansche aufweist, zwischen denen gegebenenfalls Längsrippen ausgebildet sind, wobei sich insbesondere der weiter vom ersten Ende des Anschlusssteckers entfernt ausgebildete Flansch in radialer Richtung weiter erstreckt als der andere Flansch. Diese Flansche können dabei auch dazu dienen, den Anschlussstecker mit dem Kupplungselement zu verrasten oder um eine Angriffsfläche für ein zusätzliches Rastelement wie einen Sicherungsbügel, Drahtbügel oder ähnliches zu bieten.

Bevorzugterweise weist der Anschlussstecker im Bereich des zweiten Endes einen mehreckigen, insbesondere sechseckigen äußeren Umfangsquerschnitt auf. Dadurch ist es möglich, beispielsweise mit einem Schraubenschlüssel am Anschlussstecker anzugreifen und diesen mit dem Solarelement zu verschrauben. Dies stellt eine relativ einfache Verbindungsart dar.

In einer bevorzugten Ausgestaltung sind zwei Schienen parallel zueinander und insbesondere horizontal verlaufend angeordnet, wobei in jeder Schiene Kopplungselemente derart geführt sind, dass mindestens zwei Solarelemente über die Kopplungselemente miteinander mechanisch und hydraulisch oder elektrisch in Reihe verbindbar sind und an den Schienen festlegbar sind, wobei die jeweils äußeren Kupplungselemente nur eine Aufnahme aufweisen und die die Solarelemente miteinander verbindenden Kupplungselemente zwei Aufnahmen aufweisen, von denen jeweils eine Aufnahme einem Solarelement zugeordnet ist. Durch eine derartige Ausgestaltung werden Gewichtskräfte über die Führungsseiten der Kupplungselemente auf die Seitenwände der Schiene übertragen, sodass relativ hohe Kräfte aufnehmbar sind. Über die äußeren Kupplungselemente erfolgt dann die Anbindung an die Gebäudeinstallation. Gegebenenfalls ist es auch möglich, über die äußeren Kupplungselemente einzelne Reihen von Solarelementen parallel zueinander zu verbinden.

In einer bevorzugten Ausführungsform sind die Solarelemente als Solarmodule zur Umwandlung von Sonnenenergie in elektrische Energie ausgebildet, wobei im Kanal des Kupplungselements ein elektrisch leitfähiges Medium, insbesondere ein Metallelement, angeordnet ist, wobei bei in die Aufnahme des Kupplungselements eingeführten Anschlussstecker dessen Verbindung mit dem Medium in Kontakt ist. Durch Einführen des Anschlusssteckers in die Aufnahme des Kupplungselements wird also nicht nur eine mechanische Befestigung der Solarelemente beziehungsweise der Solarmodule erreicht, sondern auch eine elektrische Anbindung an die Gebäudeinstallation hergestellt. Die Montage der Solarmodule wird dadurch sehr einfach und mit wenigen Arbeitsschritten realisierbar.

Die Aufgabe wird auch durch ein Kupplungselement für ein Befestigungssystem nach den obigen Ausführungen gelöst, wobei das Kupplungselement erfindungsgemäß in einer Schiene (5, 6) festlegbar ist und mindestens eine Aufnahme aufweist, in die ein fluidleitender oder elektrisch leitender Kanal mündet, wobei über das Kupplungselement eine mechanische Befestigung und eine hydraulische oder elektrische Verbindung von Solarelementen herstellbar ist.

Die Solarelemente können dann beispielsweise mittels schrauben, lösten, schweißen, stecken und/oder kleben mit dem Kupplungselement verbunden werden. Damit erfolgt nicht nur eine mechanisch Befestigung, sondern gleichzeitig auch ein hydraulischer oder elektrischer Anschluss. Die Montage der Solarelemente kann so in einem Schritt erfolgen und ist demnach stark vereinfacht.

Die Erfindung wird im Folgenden anhand eines bevorzugten Ausführungsbeispiels in Verbindung mit den Zeichnungen näher beschrieben. Hierin zeigen in schematischer Ansicht:
- Fig. 1: eine Solaranlage mit einem erfindungsgemäßen Befestigungssystem,
- Fig. 2: eine Draufsicht der Solaranlage nach Figur 1,
- Fig. 3: einen Ausschnitt einer Schiene,
- Fig. 4: ein Kupplungselement mit zwei Aufnahmen,
- Fig. 5: ein Kupplungselement mit einer Aufnahme, und
- Fig. 6: einen Anschlussstecker.

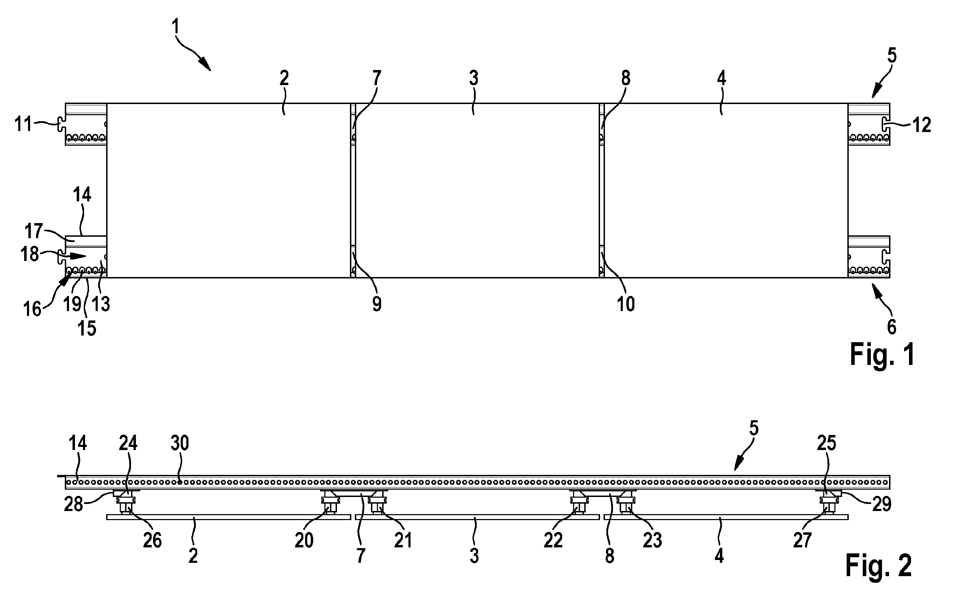

In Figur 1 ist eine Solaranlage 1 mit drei Solarelementen 2, 3, 4 dargestellt, die miteinander in Reihe verschaltet sind. Dabei sind die Solarelemente 2, 3, 4 an zwei parallel zueinander verlaufenden Schienen 5, 6 angeordnet. Die Befestigung der Solarelemente 2, 3, 4 an den Schienen 5, 6 erfolgt dabei über Kupplungselemente 7, 8, 9, 10, über die nicht nur die mechanische Fixierung der Solarelemente 2, 3, 4 an den Schienen 5, 6 erfolgt, sondern auch die mechanische Befestigung der Solarelemente 2, 3, 4 untereinander sowie das Herstellen einer funktionalen Verbindung zwischen den Solarelementen 2, 3, 4. Bei Solarelementen, die als Solarmodule ausgebildet sind und damit zur Erzeugung elektrischer Energie dienen, handelt es sich bei der funktionalen Verbindung um eine elektrisch leitende Verbindung, bei einer Ausbildung der Solarelemente als Solarkollektoren, die zur Umwandlung der Sonnenenergie in thermische Energie dienen, ist die funktionale Verbindung als hydraulische, fluidleitende Verbindung ausgebildet.

Die Schienen 5, 6 weisen an ihren Enden zueinander komplementäre Verbindungsgeometrien 11, 12 auf, die ein formschlüssiges Verbinden benachbarter Schienen zur Verlängerung in Längsrichtung ermöglichen. Bei diesem Ausführungsbeispiel ist dafür die eine Verbindungsgeometrie 11 als Amboss-förmiger Vorsprung ausgebildet, während die andere Verbindungsgeometrie 12 eine entsprechende Ausnehmung darstellt. Damit ist eine Verlängerung der Schienen problemlos möglich.

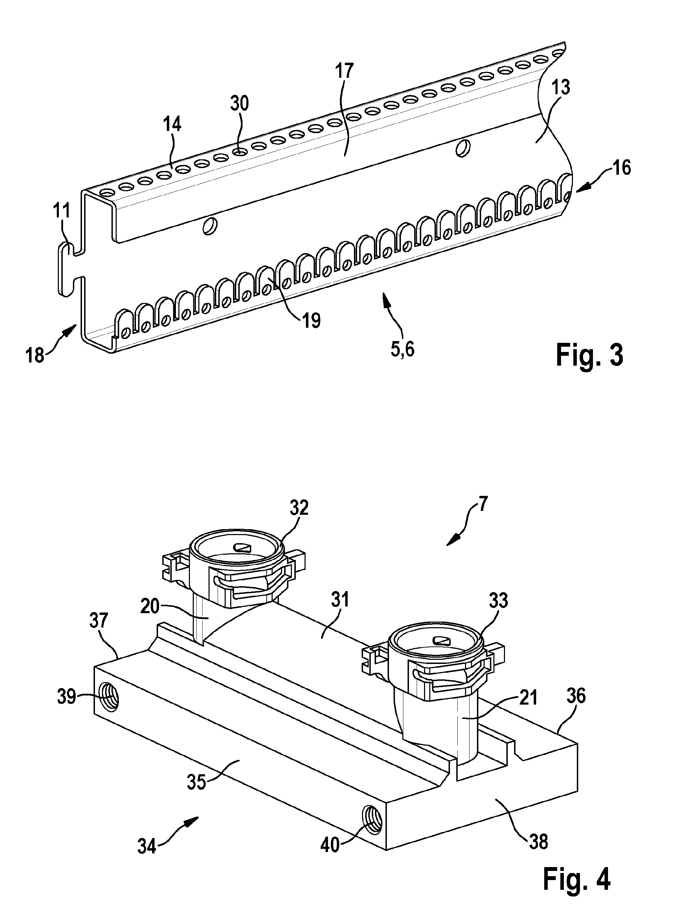

Die Schienen 5, 6 weisen einen C-förmigen Querschnitt auf mit einem Boden 13 und zwei dazu senkrecht ausgerichteten Seitenwänden 14, 15, die in aufeinander zu gerichtete Schenkel 16, 17 übergehen, die wiederum parallel zum Boden 13 verlaufen. Zwischen den Schenkeln 16, 17 ist ein freier Raum 18 belassen worden, durch den sich Aufnahmen der Kupplungselemente 7, 8, 9, 10 erstrecken können. Der obere Schenkel 17 ist dabei vollflächig ausgebildet, während der untere Schenkel 16 eine Vielzahl nebeneinander angeordneter Laschen 19 aufweist. Die Ausgestaltung der Schienen 5, 6 ist im Einzelnen insbesondere aus Figur 3 zu entnehmen.

In Figur 2 ist eine Draufsicht auf die Solaranlage 1 aus Figur 1 gezeigt. Zusätzlich zu den Kupplungselementen 7, 8 die jeweils zwei Aufnahmen 20, 21, 22, 23 aufweisen und benachbarte Solarelemente 2, 3, 4 miteinander mechanisch und funktional verbinden, sind am äußeren Rand der Solaranlage 1 Kupplungselemente 24, 25 vorgesehen, die jeweils nur eine Aufnahme 26, 27 aufweisen und zusätzlich jeweils eine Verbindungsgeometrie 28, 29 zur Anbindung an eine entsprechende Gebäudeinstallation. Die Verbindungsgeometrien 28, 29 können auch dazu genutzt werden, zusätzliche Rohre oder Kabelverbindungen anzuschließen, um beispielsweise mehrere seriell miteinander verschaltete Reihen an Solarelementen 2, 3, 4 parallel miteinander zu vernetzen.

In der oberen Seitenwand 14 der Schiene 5 sind eine Vielzahl von Öffnungen 30 eingeformt, durch die Justageelemente geführt und mit den Kupplungselementen 7, 8, 9, 10, 24, 25 in Eingriff gebracht werden können. Damit kann eine XY-Ausrichtung der Kupplungselemente mit den daran befestigten Solarelementen 2, 3, 4 realisiert werden. Dadurch ist ein gleichmäßiges Fugenbild benachbarter Solarelemente 2, 3, 4 erreichbar.

Figur 3 zeigt eine der Schienen 5, 6 in Einzeldarstellung. Die Schiene 5, 6 weist einen C-förmigen Querschnitt auf und dient zur Aufnahme der Kupplungselemente, die zunächst in Längsrichtung verfahrbar in der Schiene aufgenommen werden. Zum Festlegen der Kupplungselemente in Längsrichtung werden dann die zum jeweiligen Kupplungselement benachbarten Laschen 19 nach innen in Richtung Boden umgebogen, um durch diese plastische Verformung einen formschlüssigen Halt der Kopplungselemente zu erreichen. Dafür ist gegebenenfalls noch nicht einmal ein besonderes Werkzeug erforderlich. Dementsprechend ist es sehr einfach, die Kupplungselemente an der gewünschten Position festzulegen.

In Figur 4 ist ein Kupplungselement 7 mit zwei Aufnahmen 20, 21 für jeweils einen Anschlussstecker dargestellt, wobei die Aufnahmen 20, 21 über einen Kanal 31 miteinander verbunden sind. Die Aufnahmen 20, 21 sind im Bereich ihrer offenen Stirnseite jeweils mit einer Rastgeometrie 32, 33 versehen, um mit dem eingeführten Anschlussstecker zu verrasten. Dafür kann gegebenenfalls ein zusätzliches Rastmittel, wie eine Federklemme, vorgesehen werden.

Der Kanal 31 steht über eine Basis 34 des Kupplungselements 7 hervor und bildet je nach Ausführung enfinieder eine Fluid leitende Verbindung oder eine elektrisch leitfähige Verbindung zwischen den Aufnahmen 20, 21.

Die Basis 34 ist quaderförmig ausgebildet und weist längere, parallel zueinander verlaufende Führungsseiten 35, 36 auf, die über Stirnseiten 37, 38 verbunden sind.

In der Führungsseite 35, die im montierten Zustand des Kupplungselements 7 oben liegt, sind zwei Gewindebohrungen 39, 40 eingeformt, die zur Aufnahme von Justageelementen dienen, um eine XY-Ausrichtung des Kupplungselements 7 in den Schienen 5, 6 zu realisieren. Bei den Justageelementen handelt es sich dabei vorzugsweise um Schrauben.

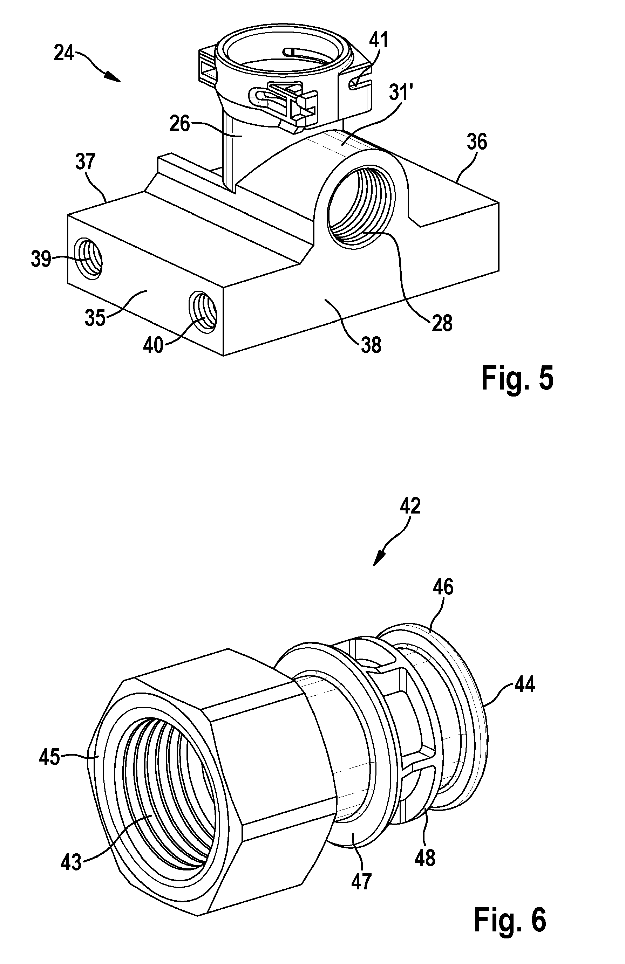

In Figur 5 ist ein Kupplungselement 24 dargestellt, dass nur eine einzige Aufnahme 26 aufweist. Diese Aufnahme 26 weist ebenfalls eine Rastgeometrie 41 entsprechend dem Kupplungselement nach Figur 4 auf.

Im Unterschied zu dem Kupplungselement nach Figur 4 mündet der Kanal 31' in die Verbindungsgeometrie 28 und nicht in eine weitere Aufnahme. Die Verbindungsgeometrie 28 dient zum Anschluss an eine Gebäudeinstallation oder zur Verbindung mit weiteren Rohrelementen.

Während das Kupplungselement, wie es in Figur 4 dargestellt ist, zum Verbinden benachbarter Solarelemente miteinander verwendet wird, dient das Kupplungselement entsprechend Figur 5 zur Anbindung der Solarelemente an die Gebäudeinstallation. Dementsprechend finden sich die Kupplungselemente, wie sie in Figur 5 gezeigt sind, an den äußeren Rändern der jeweils äußeren Solarelemente.

Im Übrigen entspricht der Aufbau des Kupplungselements nach Figur 5 dem Kupplungselement nach Figur 4, wobei es jedoch eine kürzere Längserstreckung aufweist. Dementsprechend sind die gleichen Bezugszeichen, wie in Figur 4, verwendet worden.

In Figur 6 ist ein Beispiel für einen Anschlussstecker 42 gezeigt. Zum Anbringen an ein Solarelement weist der Anschlussstecker 42 eine Anschlussgeometrie 43 in Form eines Innengewindes auf, die von einem sechseckigen Außenquerschnitt umgeben ist. Dadurch ist es möglich, den Anschlussstecker 42 fluiddicht mit dem Solarelement zu verschrauben und so auch eine mechanisch sicher zu verbinden.

Am ersten Ende 44, das einem zweiten Ende 45, an dem die Anschlussgeometrie 43 ausgebildet ist, gegenüberliegt, weist der Anschlussstecker 42 eine Rast- und Dichtgeometrie in Form eines umlaufenden Kragens 46 auf. Mit diesem ersten Ende 44 wird der Anschlussstecker in eine der Aufnahmen der Kupplungselemente eingeführt und dort mechanisch verrastet. Dafür weist der Anschlussstecker 42 noch zwei radialvorstehende, umlaufende Flansche 47, 48 auf.

Bei diesem Ausführungsbeispiel dienen die gezeigten Kupplungselemente und der Anschlussstecker zum Herstellen einer hydraulischen Verbindung, also der Befestigung von Solarkollektoren, die zur Umwandlung der Sonnenenergie in thermische Energie dienen. Zwischen den Aufnahmen 20, 21 beziehungsweise der Aufnahme 26 und der Verbindungsgeometrie 28 ist also eine fluid leitende Verbindung ausgebildet.

In einer alternativen Ausgestaltung ist anstelle einer fluidleitenden Verbindung jeweils eine elektrisch leitfähige Verbindung vorgesehen, beispielsweise in Form eines Metallelements. An dem Anschlussstecker sind dann entsprechende Übertragungskontakte ausgebildet, die mit dem Kanal elektrisch leitfähigerweise kontaktiert werden können, wenn der Anschlussstecker in die Aufnahmen eingeführt ist.

Das erfindungsgemäße Befestigungssystem ist daher im Prinzip sowohl für Solarmodule als auch für Solarkollektoren anwendbar. Dabei lässt sich in einem Schritt über die Kupplungselemente sowohl eine mechanische Fixierung der Solarelemente erreichen, als auch eine hydraulische beziehungsweise elektrische Kopplung herstellen. Für den Anfang beziehungsweise dem Ende einer seriellen Verschaltung und dem Übergang zur Gebäudeinstallation sind dabei Kupplungselemente vorgesehen, die nur eine Aufnahme und eine Verbindungsgeometrie aufweisen, während für eine serielle oder parallele Verschaltung von Solarelementen Kupplungselemente dienen, die zwei Aufnahmen besitzen. Die Anschlussstecker, die in die Aufnahmen einführbar sind und dort eine mechanische und funktionelle Verbindung bewirken, sind dabei insbesondere fest mit den Solarelementen verbunden. Dabei sind diese stabil ausgebildet, um das Gewicht der Solarelemente tragen zu können.

Mithilfe des erfindungsgemäßen Befestigungssystems ist es also möglich, durch einfaches Absetzen der Solarelemente in die zuvor in den Schienen angeordneten Kupplungselemente eine mechanische Fixierung und eine dichte Verrohrung beziehungsweise elektrische Kontaktierung herzustellen. Für eine elektrische Kontaktierung weisen die Anschlussstecker dabei insbesondere Kontaktstifte auf. Über die Justageelemente, die insbesondere als Schrauben ausgebildet sind, lässt sich dabei eine XY-Verstellung der montierten Solarelemente bewirken, also Einstellung von vertikalen und horizontalen Fugen. Dabei werden die Kupplungselemente durch Umbiegen der Laschen an den Schienen in Schienenlängsrichtung positioniert.

Insgesamt kommt das erfindungsgemäße Befestigungssystem mit sehr wenigen Einzelteilen aus. Dabei sind auch nur sehr wenige Arbeitsschritte erforderlich, um die Solarelemente sicher mit den Schienen und untereinander mechanisch und funktinonal zu verbinden. Somit verringert sich ein Montageaufwand deutlich.

## Patentansprüche

1. Befestigungssystem für Solarelemente (2, 3, 4), insbesondere Solarmodule oder Solarkollektoren, mit mindestens einer Schiene (5, 6), mindestens einem Kupplungselement (7, 8, 9, 10, 24, 25) und mindestens einem Anschlussstecker (42), wobei das Kupplungselement (7, 8, 9, 10, 24, 25) in der Schiene (5, 6) festlegbar geführt ist und mindestens eine Aufnahme (20, 21, 22, 23, 26, 27) aufweist, in die der Anschlussstecker (42) mit einem ersten Ende (44) formschlüssig aufnehmbar ist,
**dadurch gekennzeichnet, dass**
das Kupplungselement (7, 8, 9, 10, 24, 25) einen in die Aufnahme (20, 21, 22, 23, 26, 27) mündenden fluidleitenden oder elektrisch leitenden Kanal (31, 31') und der Anschlussstecker (42) eine fluidleitende oder elektrisch leitende Verbindung aufweist, die bei in die Aufnahme (20, 21, 22, 23, 26, 27) eingeführtem Anschlussstecker (42) mit dem Kanal (31, 31') in fluidleitender oder elektrisch leitender Verbindung steht, wobei der in die Aufnahme (20, 21, 22, 23, 26, 27) des Kupplungselements (7, 8, 9, 10, 24, 25) aufgenommene Anschlussstecker (42) eine mechanische Befestigung und eine hydraulische oder elektrische Verbindung zwischen einem mit dem Anschlussstecker (42) verbundenen Solarelement (2, 3, 4) und dem Kupplungselement (7, 8, 9, 10, 24, 25) bildet.

2. Befestigungssystem nach Anspruch 1, **dadurch gekennzeichnet, dass** der Anschlussstecker (42) an einem dem ersten Ende (44) abgewandten zweiten Ende (45) eine Anschlussgeometrie (43) zum Festlegen an einem Solarelement (2, 3, 4) aufweist, wobei die fluidleitende oder elektrisch leitende Verbindung zwischen ersten Ende (44) und zweiten Ende (45) ausgebildet ist.

3. Befestigungssystem nach Anspruch 1 oder 2, **dadurch gekennzeichnet, dass** der Anschlussstecker (42) innerhalb der Aufnahme (20, 21, 22, 23, 26, 27) verrastbar ist, wobei insbesondere ein Rastelement mit dem Anschlussstecker (42) und dem Kupplungselement (7, 8, 9, 10, 24, 25) zusammenwirkt.

4. Befestigungssystem nach einem der vorhergehenden Ansprüche, **dadurch gekennzeichnet, dass** die Schiene (5, 6) einen c-förmigen Querschnitt mit einem Boden (13), zwei Seitenwänden (14, 15) und zwei aufeinander zu gewandten Schenkeln (16, 17) aufweist.

5. Befestigungssystem nach Anspruch 4, **dadurch gekennzeichnet, dass** ein erster Schenkel (16) der Schiene (5, 6) durch eine Vielzahl in Längsrichtung der Schiene (5, 6) nebeneinander angeordnete Laschen (19) gebildet ist, die einzeln in Richtung Boden (13) plastisch verformbar sind, wobei das Kupplungselement (7, 8, 9, 10, 24, 25) zwischen zwei plastisch verformten Laschen (19) in Längsrichtung fixierbar ist.

6. Befestigungssystem nach Anspruch 4 oder 5, **dadurch gekennzeichnet, dass** in eine der Seitenwände (14, 15) der Schiene (5, 6) Öffnungen (30) zum Durchführen von mit dem Kupplungselement (7, 8, 9, 10, 24, 25) zusammenwirkenden Justageelementen ausgebildet sind, die insbesondere als Schrauben ausgebildet sind.

7. Befestigungssystem nach einem der vorhergehenden Ansprüche, **dadurch gekennzeichnet, dass** die Schiene (5, 6) an ihren Enden zueinander komplementäre Verbindungsgeometrien (11, 12) zum formschlüssigen Verbinden benachbarter Schienen aufweist.

8. Befestigungssystem nach einem der vorhergehenden Ansprüche, **dadurch gekennzeichnet, dass** das Kupplungselement (7, 8, 9, 10, 24, 25) eine insbesondere quaderförmige Basis (34) aufweist, die zwei zueinander parallele Führungsseiten (35, 36) aufweist, die durch zwei Stirnseiten (37, 38) miteinander verbunden sind, wobei die Basis (34) innerhalb der Schiene (5, 6) aufnehmbar ist, wobei sich die Aufnahme (20, 21, 22, 23, 26, 27) durch einen Freiraum (18) zwischen den Schenkeln (16, 17) der Schiene (5, 6) hindurch erstreckt.

9. Befestigungssystem nach einem der vorhergehenden Ansprüche, **dadurch gekennzeichnet, dass** das Kupplungselement (7, 8, 9, 10) zwei Aufnahmen (20, 21, 22, 23) aufweist, die über den Kanal (31) fluidleitend oder elektrisch leitend miteinander verbunden sind, wobei sich die Aufnahmen (20, 21, 22, 23) insbesondere parallel zueinander auf der gleichen Seite der Basis (34) und gegebenenfalls senkrecht zum Kanal (31) erstrecken.

10. Befestigungssystem nach einem der vorhergehenden Ansprüche, **dadurch gekennzeichnet, dass** der Kanal (31') in eine Verbindungsgeometrie (28) mündet, die insbesondere in einer der Stirnseiten (37, 38) des Kupplungselements (24, 25) ausgebildet ist.

11. Befestigungssystem nach einem der vorhergehenden Ansprüche, **dadurch gekennzeichnet, dass** am ersten Ende (44) des Anschlusssteckers (42) eine Rast- und Dichtgeometrie (46) ausgebildet ist, die insbesondere durch mindestens einen, radial vorstehenden, umlaufenden Kragen gebildet ist.

12. Befestigungssystem nach einem der vorhergehenden Ansprüche, **dadurch gekennzeichnet, dass** zwei Schienen (5, 6) parallel zueinander und insbesondere horizontal verlaufend angeordnet sind, wobei in jeder Schiene (5, 6) Kupplungselemente (7, 8, 9, 10, 24, 25) derart geführt sind, dass mindestens zwei Solarelemente (2, 3, 4) über die Kupplungselemente (7, 8, 9, 10, 24, 25) miteinander mechanisch und hydraulisch oder elektrisch in Reihe verbindbar sind und an den Schienen (5, 6) festlegbar sind, wobei die jeweils äußeren Kupplungselemente (24, 25) nur eine Aufnahme (26, 27) aufweisen und die die Solarelemente (2, 3, 4) miteinander verbindenden Kupplungselemente (7, 8, 9, 10) zwei Aufnahmen (20, 21, 22, 23) aufweisen, von denen jeweils eine Aufnahme (20, 21, 22, 23) einem Solarelement (2, 3, 4) zugeordnet ist.

13. Befestigungssystem nach einem der vorhergehenden Ansprüche, **dadurch gekennzeichnet, dass** die Solarelemente (2, 3, 4) als Solarmodule zur Umwandlung von Sonnenenergie in elektrische Energie ausgebildet sind, wobei im Kanal (31, 31') des Kupplungselements (7, 8, 9, 10, 24, 25) ein elektrisch leitfähiges Medium, insbesondere ein Metallelement, angeordnet ist, wobei bei in die Aufnahme des Kupplungselements eingeführtem Anschlussstecker (42) dessen Verbindung mit dem Medium in Kontakt ist.

14. Kupplungselement für ein Befestigungssystem nach einem der vorhergehenden Ansprüche, **dadurch gekennzeichnet, dass** das Kupplungselement (7, 8, 9, 10, 24, 25) in einer Schiene (5, 6) festlegbar ist und mindestens eine Aufnahme (20, 21, 22, 23, 26, 27) aufweist, in die ein fluidleitender oder elektrisch leitender Kanal (31, 31') mündet, wobei über das Kupplungselement (7, 8, 9, 10, 24, 25) eine mechanische Befestigung und eine hydraulische oder elektrische Verbindung von Solarelementen (2, 3, 4) herstellbar ist.
